# EUROPEAN PATENT APPLICATION

(11) **EP 4 600 593 A1**
(43) Date of publication of application: **13.08.2025**
(21) Application number: 24156096.0
(22) Date of filing: 06.02.2024
(51) Int. Cl.: F25J 3/02, F25J 3/06

(54) **PROCESS AND APPARATUS FOR THE SEPARATION OF A GASEOUS MIXTURE INCLUDING CARBON DIOXIDE AND AT LEAST ONE COMPONENT LIGHTER THAN CARBON DIOXIDE BY PARTIAL CONDENSATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: LECLERC, Mathieu, 94503 Champigny-sur-Marne (FR); RICCI, Laura, 94503 Champigny-sur-Marne (FR); PONTISSO, Hugo, 94503 Champigny-sur-Marne (FR); RAVENTOS, Martin, 94503 Champigny-sur-Marne (FR); LU, Vincent, Houston, TX 77024 (US)
(74) Representative: Air Liquide

(57) **Abstract**

Process for the separation of a gaseous mixture including carbon dioxide and at least one component lighter than carbon dioxide by partial condensation including the steps of:partially condensing the gaseous mixture (1), expanding the gaseous phase in a first turbine (T1) and separating the expanded gaseous phase by permeation (M).

## Description

The present invention relates to a process and apparatus for the separation of a gaseous mixture including carbon dioxide and at least one component lighter than carbon dioxide by partial condensation.

The mixture preferably contains less than 5% mol methane or even less than 2% mol methane.

It is known from WO2017/216456 to separate a gaseous mixture containing CO2 and at least one lighter component by partially condensing the mixture, warming it, expanding it in a valve and separating it by permeation to form a permeate and a retentate.

The retentate stream is expanded in an expander machine.

In the process described in the previous paragraph, the gas produced from the partial condensation step is at a first pressure, and the membrane on this flash gas operates at a second lower pressure. The energy in this gas is not recovered, since the gas is let down to the desired pressure through a valve.

FR2877939 describes sending a gas from a phase separator at 57 bars to a membrane without any intervening expansion step.

The stored energy in the gas becomes more and more significant as the size of the apparatus increases, and as the differential pressure between the gas pressure and membrane operation pressure increases. Therefore, this invention aims to recover the stored energy in the flash gas stream and enhance the efficiency of the process.

The key innovative element in this process is recovering the energy in the flash gas expanding the flash gas through at least one first turbine, such as a turbine. The energy recovered can be applied to a number of applications depending on specific process scheme and conditions. When the expander is directly paired with a generator, it can produce electricity for various uses. When higher pressure is desired in the cryogenic section, instead of increasing the discharge pressure of the flue gas compressor, the flash gas expander can be paired with a booster compressor that boosts the flue gas pressure. The expander can also be paired with a booster compressor for product CO₂ and this scheme eliminates one stage of the final CO₂ product compressor which optimizes the setup when the process conditions require an odd number stage CO2 product compressor.

The present invention differs from that of US2016256820 in that the feed mixture is not separated by any permeation step upstream of the partial condensation. In this way, the membranes are dimensioned solely to separate the flash gas. In addition, the membranes preferably operate at ambient temperature.

According to an object of the invention, there is provided a process for the separation of a gaseous mixture including carbon dioxide and at least one component lighter than carbon dioxide by partial condensation including the steps of:
a. Compressing the gaseous mixture at a first temperature above 0°C to a first pressure in a multi-stage compressor forming a compressed gaseous mixture at a second temperature above 0°C
b. Cooling-down the compressed gaseous mixture in a heat exchanger to a third temperature whereby the compressed gaseous mixture is partially condensed
c. Separating at least part of
   i) the partially condensed gaseous mixture or
   ii) a partially condensed gas produced by partially condensing a gas formed by separating the partially condensed gaseous mixture
   in a phase separator forming a liquid enriched in CO2 and depleted in the at least one component with respect to the gaseous mixture and a gas depleted in CO2 and enriched in the at least one component with respect to the gaseous mixture, without any intervening permeation step following the cooling of the compressed gaseous mixture
d. Warming the gas depleted in CO2 produced from step c in the heat exchanger to form a warmed gas at a fourth temperature above 0°C and a second pressure of at least 20 bars abs
e. Expanding at least part of the warmed gas from the second pressure to a third pressure between 14 and 18 bar abs and a fifth temperature in a first turbine to form an expanded gas
f. Warming the expanded gas at the third pressure in the heat exchanger to a sixth temperature and
g. Performing separation of the expanded warmed gas at the sixth temperature in a membrane system at the third pressure to produce a permeate, enriched in CO2 with respect to the expanded warmed gas, and a retentate, depleted in CO2 with respect to the expanded warmed gas.

According to optional features of the invention:
- the gaseous mixture is not separated in the membrane system after or before the compression step a).
- the liquid from the phase separator is separated in a distillation column.
- the at least one other component is chosen in the group: N₂, O₂, Ar, CO, CH₄, H₂, He.
- the retentate is expanded in a second turbine.
- the multi-stage compressor is driven by the first or second turbine.
- the first or second turbine drives a generator producing electrical power.
- the first or second turbine drives a CO₂ compressor for compressing a CO2 rich product which is formed by at least one of vaporising the CO2 enriched liquid and separating the CO2 enriched liquid by distillation.
- the separation by permeation takes place at a temperature above 0°C.
- the inlet temperature of the first turbine is above 0°C.
- the outlet temperature of the first turbine is below -40°C.
- at least part of the gaseous phase is warmed upstream of the first turbine by indirect heat exchange with the mixture to be separated.
- at least part of the gaseous phase is warmed downstream of the first turbine by indirect heat exchange with the mixture to be separated.
- the second pressure is at least 5 bars greater than the third pressure.

According to a further object of the invention, there is provided an apparatus for the separation of a gaseous mixture including carbon dioxide and at least one component lighter than carbon dioxide by partial condensation including:
a. a multi-stage compressor for compressing the gaseous mixture at a first temperature above 0°C to a first pressure forming a compressed gaseous mixture at a second temperature above 0°C
b. a heat exchanger for cooling-down the compressed gaseous mixture to a third temperature whereby the compressed gaseous mixture is partially condensed
c. a phase separator and means for separating at least part of
   i) the partially condensed gaseous mixture or
   ii) a partially condensed gas produced by partially condensing a gas formed by separating the partially condensed gaseous mixture
   in the phase separator forming a liquid enriched in CO2 and depleted in the at least one component with respect to the gaseous mixture and a gas depleted in CO2 and enriched in the at least one component with respect to the gaseous mixture, without any intervening permeation unit downstream of the heat exchanger for the cooling of the compressed gaseous mixture
d. means for sending the gas depleted in CO2 to the heat exchanger to form a warmed gas at a fourth temperature above 0°C and a second pressure of at least 20 bars abs
e. a first turbine for expanding at least part of the warmed gas from the second pressure to a third pressure between 14 and 18 bar abs and a fifth temperature forming an expanded gas
f. means for sending the expanded gas at the third pressure in the heat exchanger to be warmed to a sixth temperature and
g. a membrane system for performing separation of the expanded warmed gas at the sixth temperature at the third pressure to produce a permeate, enriched in CO2 with respect to the expanded warmed gas, and a retentate, depleted in CO2 with respect to the expanded warmed gas.

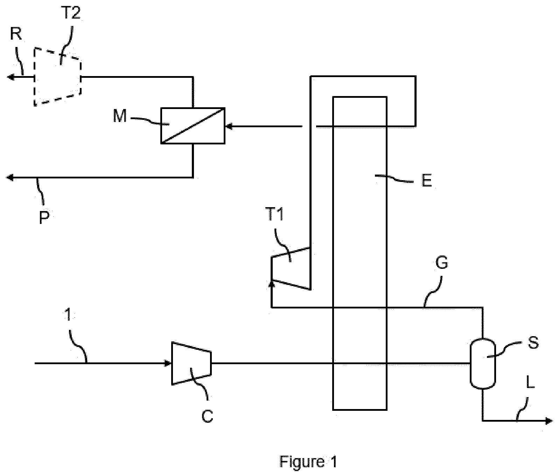

The invention will be described in greater detail whilst referring to Figure 1 which shows a process according to the invention schematically.

A gaseous mixture 1 including carbon dioxide and at least one component lighter than carbon dioxide is to be separated by partial condensation. The at least one component can be chosen in the group N₂, O₂, Ar, CO, CH₄, H₂, He. The mixture at a first temperature above 0° is compressed in a multi-stage compressor C to a first pressure forming a compressed gaseous mixture at a second temperature above 0°C. It may be dried in a drier, eg a TSA system, if it contains water. The compressed gaseous mixture is cooled and partially condensed in a heat exchanger E to a third temperature. The partially condensed compressed gaseous mixture is separated in a phase separator forming a liquid L enriched in CO2 and depleted in the at least one component and a gas depleted in CO2 and enriched in the at least one component. The gas G depleted in CO2 and enriched in the at least one component. is warmed in the heat exchanger to emerge from the warm end of the heat exchanger forming a warmed gas at a fourth temperature above 0°C and a second pressure of at least 20 bars abs.

At least part of the warmed gas is expanded to a third pressure between 14 and 18 bar abs and a fifth temperature in a first turbine. The expanded gas at the third pressure in the heat exchanger is warmed to a sixth temperature and separated at the sixth temperature in a membrane system M at the third pressure to produce a permeate P and a retentate R.

The permeate P is enriched in CO2 with respect to the expanded warmed flash gas, and the retentate R is depleted in CO2 with respect to the expanded warmed flash gas.

If the expanded warmed flash gas contains nitrogen and carbon monoxide, the permeate P is depleted in nitrogen and carbon monoxide with respect to the expanded warmed flash gas, and the retentate R is enriched in nitrogen and carbon monoxide with respect to the expanded warmed flash gas.

If the expanded warmed flash gas contains oxygen, the permeate P is depleted in oxygen with respect to the expanded warmed flash gas, and the retentate R is enriched in oxygen with respect to the expanded warmed flash gas.

The retentate eventually is vented to the atmosphere, and the permeates are used as TSA regeneration and eventually recycled to the inlet of the compressor.

Alternatively there are two phase separators. The first separator separates partially condensed compressed gaseous mixture is separated in a phase separator forming a liquid enriched in CO2 and depleted in the at least one component and a gas depleted in CO2 and enriched in the at least one component. The gas depleted in CO2 and enriched in the at least one component Is then separated in a second phase separator and the gas from the second phase separator is warmed in the heat exchanger E, expanded in turbine T1, warmed in the heat exchanger E and separated in membrane system M.

The liquid L from the first phase separator and the liquid from the second phase separator (if present) can be sent to a distillation column to produce pure CO2. This pure CO2 is generally produced in liquid form and then vaporised to form a gas which may be compressed in a CO2 compressor. As mentioned, the expander T1 can also be paired with a booster compressor for product CO₂ and this scheme eliminates one stage of the final CO₂ product compressor which optimizes the setup when the process conditions require an odd number stage CO2 product compressor.

The retentate R may be expanded in a second turbine T2.

The multi-stage compressor C may be is driven by the first or second turbine T1, T2.

The first or second turbine T1, T2 may drive a generator producing electrical power.

The first or second turbine T1, T2 may drive a CO₂ compressor.

## Claims

1. Process for the separation of a gaseous mixture including carbon dioxide and at least one component lighter than carbon dioxide by partial condensation including the steps of:
a. Compressing the gaseous mixture (1) at a first temperature above 0°C to a first pressure in a multi-stage compressor (C) forming a compressed gaseous mixture at a second temperature above 0°C
b. Cooling-down the compressed gaseous mixture in a heat exchanger (E) to a third temperature whereby the compressed gaseous mixture is partially condensed
c. Separating at least part of
i) the partially condensed gaseous mixture or
ii) a partially condensed gas produced by partially condensing a gas formed by separating the partially condensed gaseous mixture
in a phase separator (S) forming a liquid (L) enriched in CO2 and depleted in the at least one component with respect to the gaseous mixture and a gas (G) depleted in CO2 and enriched in the at least one component with respect to the gaseous mixture, without any intervening permeation step following the cooling of the compressed gaseous mixture
d. Warming the gas depleted in CO2 produced from step c in the heat exchanger to form a warmed gas at a fourth temperature above 0°C and a second pressure of at least 20 bars abs
e. Expanding at least part of the warmed gas from the second pressure to a third pressure between 14 and 18 bar abs and a fifth temperature in a first turbine (T1) to form an expanded gas
f. Warming the expanded gas at the third pressure in the heat exchanger to a sixth temperature and
g. Performing separation of the expanded warmed gas at the sixth temperature in a membrane system (M) at the third pressure to produce a permeate (P), enriched in CO2 with respect to the expanded warmed gas, and a retentate (R), depleted in CO2 with respect to the expanded warmed gas.

2. Process according to Claim 1 wherein the gaseous mixture (1) is not separated in the membrane system (M) after or before the compression step a).

3. Process according to any preceding Claim wherein the liquid (L) from the phase separator (S) is separated in a distillation column.

4. Process according to any preceding Claim wherein the at least one other component is chosen in the group: N₂, O₂, Ar, CO, CH₄, H₂, He.

5. Process according to any preceding Claim wherein the retentate (R) is expanded in a second turbine (T2).

6. Process according to any preceding Claim wherein the multi-stage compressor (C) is driven by the first or second turbine (T1, T2).

7. Process according to any preceding Claim where the first or second turbine (T1, T2) drives a generator producing electrical power.

8. Process according to any preceding Claim where the first or second turbine (T1, T2) drives a CO₂ compressor for compressing a CO2 rich product which is formed by at least one of vaporising the CO2 enriched liquid and separating the CO2 enriched liquid (L) by distillation.

9. Process according to any preceding claim wherein the separation by permeation (M) takes place at a temperature above 0°C.

10. Process according to any preceding claim wherein the inlet temperature of the first turbine (T1) is above 0°C.

11. Process according to any preceding claim wherein the outlet temperature of the first turbine (T1) is below -40°C.

12. Process according to any preceding claim wherein at least part of the gaseous phase is warmed upstream of the first turbine (T1) by indirect heat exchange with the mixture to be separated (1).

13. Process according to any preceding claim wherein at least part of the gaseous phase is warmed downstream of the first turbine (T1) by indirect heat exchange with the mixture to be separated (1).

14. Process according to any preceding claim wherein the second pressure is at least 5 bars greater than the third pressure or at least 8 bars greater than the third pressure or at least 10 bars greater than the third pressure or at least 15 bars greater than the third pressure.

15. Apparatus for the separation of a gaseous mixture including carbon dioxide and at least one component lighter than carbon dioxide by partial condensation including:
a. a multi-stage compressor (C) for compressing the gaseous mixture (1) at a first temperature above 0°C to a first pressure forming a compressed gaseous mixture at a second temperature above 0°C
b. a heat exchanger (E) for cooling-down the compressed gaseous mixture to a third temperature whereby the compressed gaseous mixture is partially condensed
c. a phase separator (S) and means for separating at least part of
i) the partially condensed gaseous mixture or
ii) a partially condensed gas produced by partially condensing a gas formed by separating the partially condensed gaseous mixture
in the phase separator forming a liquid (L) enriched in CO2 and depleted in the at least one component with respect to the gaseous mixture and a gas (G) depleted in CO2 and enriched in the at least one component with respect to the gaseous mixture, without any intervening permeation unit downstream of the heat exchanger for the cooling of the compressed gaseous mixture
d. means for sending the gas depleted in CO2 to the heat exchanger to form a warmed gas at a fourth temperature above 0°C and a second pressure of at least 20 bars abs
e. a first turbine (T1) for expanding at least part of the warmed gas from the second pressure to a third pressure between 14 and 18 bar abs and a fifth temperature to form an expanded gas
f. means for sending the expanded gas at the third pressure in the heat exchanger to be warmed to a sixth temperature and
g. a membrane system (M) for performing separation of the expanded warmed gas at the sixth temperature at the third pressure to produce a permeate (P), enriched in CO2 with respect to the expanded warmed gas, and a retentate (R), depleted in CO2 with respect to the expanded warmed gas.
